(19) Europäisches Patentamt / European Patent Office / Office européen des brevets

(11) **EP 2 769 995 B1**

(12) **EUROPEAN PATENT SPECIFICATION**

(45) Date of publication and mention
of the grant of the patent:
**03.02.2016 Bulletin 2016/05**

(51) Int Cl.:
***C08F 2/22*** *(2006.01)*     ***C08F 2/44*** *(2006.01)*

(21) Application number: **13155927.0**

(22) Date of filing: **20.02.2013**

(54) **MICRO-STRUCTURED MATERIAL AND METHOD FOR THE PREPARATION THEREOF**

MIKROSTRUKTURIERTES MATERIAL UND VERFAHREN ZUR HERSTELLUNG DAVON

MATÉRIAU MICROSTRUCTURÉ ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.08.2014 Bulletin 2014/35**

(73) Proprietor: **King Saud University
11421 Riyadh (SA)**

(72) Inventor: **Fakhry Dyab, Amro Khalil
11451 Riyadh (SA)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**WO-A1-03/004150     WO-A1-2004/096422
WO-A1-2006/130904     WO-A1-2009/013500
WO-A1-2010/058148     FR-A1- 2 679 788
GB-A- 2 400 609     JP-A- H 083 031
US-A1- 2003 175 317     US-A1- 2008 220 176**

**Description**

The present invention relates to a micro-structured material and a method for the preparation thereof.

The synthesis of multifunctional polymeric microparticles and diverse porous materials has been topic of increasing interest in both academic and industrial fields. Several functionalities are able to be simultaneously encapsulated into polymeric microspheres, such as magnetism and fluorescence, and others. These functional microspheres exhibit an ability to change their physicochemical properties in response to environmental stimuli, including magnetic or electric fields, light, temperature, pH, chemicals or mechanical stress. Such multifunctional microspheres have found diverse applications in biomedical and biotechnological fields, such as controlled drug delivery, cellular imaging, cell recognition, cancer-specific multi-modal imaging and dual-protein delivery.

The combination of magnetic and fluorescent properties into a single micro- or nanocompo-site material may greatly enhance the applications of the material in the biomedical and bio-pharmaceutical fields. Emulsion templating methods represent an attractive route to highly porous and permeable polymeric materials with a well-defined porosity. The process has been known since at least the 1960's, was developed extensively by workers at Unilever in the 1980's (EP 0 060 138 B1) and in recent years has seen increased interest from both academia and industry.

A high internal phase emulsion (HIPE) is a concentrated emulsion in which the droplet phase comprises greater than 70% of the total volume of the emulsion. The external (non-droplet) phase is converted into a solid polymer and the emulsion droplets are removed yielding (in most cases) a highly interconnected network of micron sized pores of quite well defined diameter. The resulting material is often termed a polymerized HIPE, or polyHIPE. In recent years, there has been increasing interest in the use of solid particles as sole emulsifier to stabilize the internal phase (e.g., droplets) of the HIPEs. However, one important limitation was raised but has been recently overcome. Kralchevsky et al., Langmuir, 2005, 21, 50, have theoretically predicted that particle-stabilized emulsions will phase invert above an internal-phase volume fraction of 0.5. Colver et al., Chem. Mater. 2007, 19, 1537, reported that in practice, emulsions are stabilized by sub-micrometer microgel particles with volume fractions of the dispersed phase of only 50%. Binks and co-workers showed that particle-stabilized w/o emulsions commonly phase invert between volume fractions of 0.65 to 0.70. Recently, a successful preparation of polyHIPEs with closed pores structure stabilized solely by oleic acid functionalised titania or silica particles has been reported with 90% internal phase volume. In addition, different polyHIPEs have been prepared using laboratory modification of silica nanoparticles with different silanising agents. Surfactant-stabilized polyHIPE monodisperse porous polymer beads have been prepared via oil-in-water-in-oil (o/w/o) emulsion-templated sedimentation polymerization, Zhang et al., Chem. Mater. 2002, 14, 4017.

The knowledge that fine solid powders can stabilize emulsions dates back to the turn of the last century. The credit is usually given to Pickering, who originally recognised the role of finely divided insoluble solid particles in stabilizing emulsions. It is now well established that solid particles of colloidal dimensions can act as excellent emulsifies alone for both oil-in-water (o/w) and water-in-oil (w/o) emulsions (US 2003/0175317 A1). Since the energy of attachment of particles to oil-water interfaces is very high (thousands of $kT$/particle), such particles are held very strongly in the interface giving rise to extremely stable drops within emulsions. Multiple emulsions were first described by Seifriz in 1925, but it is only in the past twenty years that they have been studied in more detail. Common types of multiple emulsions may be either of the water-in-oil-in-water type (w/o/w) or of the oil-in-water-in-oil type (o/w/o).

Increasing attention has been devoted to these systems with the aim of taking advantage of their multiple compartment structure. Multiple emulsions are generally prepared with high concentrations (5-50%) of two emulsifiers (one lipophilic, one hydrophilic) of oppositely-curved interfaces. However, the most common problem associated with multiple emulsions is their inherent thermodynamic instability since the emulsifiers tend to mix at the interfaces and destabilize giving simple o/w emulsions. This is why the use of multiple emulsions as commercial products is so restricted, though much attention has been paid to their many potential practical applications.

Extremely stable Pickering simple and multiple emulsions of the two common types stabilized solely by silica nanoparticles for different liquids have been reported in previous work (US 2003/0175317 A1). The formulated multiple emulsions were completely stable against coalescence for around ten years. Straightforward methods for fabrication of polymeric materials including dual function magnetic and fluorescent hybrid microparticles with different morphologies, namely the multi-core or porous unusual structures (based on double w/o/w emulsions) were reported here. Porous materials based on aqueous or non-aqueous HIPEs stabilized solely by hydrophobic silica nanoparticles or organo-modified Laponite clay nanoparticles have been prepared. Selected porous structures have been functionalised by inclusion of either natural sporopollenin microcapsules (derived from *Lycopodium clavatum*) or zinc metal particles. In addition, a novel hierarchical porous structure based on polymerization of a triple Pickering water-in-oil-in-water-in-oil (w/o/w/o) emulsion of different morphologies was reported for the first time.

GB 2 400 609 discloses a cleaning composition comprising a multiple emulsion system. To initiate a polymerization, the emulsion is destroyed.

Emulsions with no aqueous phase (anhydrous, non-aqueous, oil-in-oil emulsions, oil-polar solvent) have had relatively scant attention, where non-aqueous systems are well known as solvents for drugs, suspension vehicles, and oleogels. However non-aqueous emulsions could replace regular aqueous emulsions wherever the presence of water is undesirable; for example, in cleaning systems that are sensitive to formation of rust such as engines and other mechanical systems, or for doing sol-gel processes with hydrolysable metal alkoxides in organized media in a controlled way.

The delivery of poorly water-soluble drugs has been the subject of much research, as approximately 40% of new chemical entities are hydrophobic in nature. One area in which published literature is lacking is the field of non-aqueous emulsions filled into capsules. The scarcity of information regarding non-aqueous and non-oil containing emulsions is unfortunate because many unique and useful properties may be found among such systems. Non-polymerizable non-aqueous emulsions may have potential applications in pharmaceutical or cosmetic areas if they are composed essentially of edible, nontoxic ingredients and can be formulated to exhibit a wide range of physical properties exemplified by possible delivery of lipophilic drugs.

For surfactant-stabilized systems, the major challenge for preparing stable non-aqueous emulsions was to find a suitable stabilizer which is selectively soluble in either of the immiscible oil phases. This required a design of special stabilizer, mostly block-copolymers, for each couple of oils which was considered as a drawback for this approach (A. Imhof et al. J. Colloid. Interface Sci. 1997, 192, 368). Another strategy was to find a suitable solvent that can replace water and stabilize the system in a similar way utilized in aqueous systems with conventional surfactants.

Some possible uses also might be as topical application bases for dermatological, particularly for labile drugs, as emollient bases for cosmetic preparations, or as nutrient preparations. For these types of emulsions, almost exclusively steric stabilization is adopted. For such emulsions, it was shown that tailor-made block copolymers are by far the most efficient stabilizers compared to low molecular weight surfactants. Polymerizable non-aqueous emulsions are of interest as nanoreactor systems for the polymerization of water-sensitive monomers or catalysts. Emulsion templating methods represent an attractive route to highly porous and permeable polymeric materials with a well-defined porosity, yet mainly based on aqueous systems.

It is an object of the present invention to provide novel micro-structured materials and methods for preparing such materials overcoming the drawbacks of the prior art. In particular, micro-structured materials having improved chemical and physical properties, such as mechanical, thermal and storage stability, shall be provided. Moreover, methods for preparing such micro-structured materials shall be provided allowing easy control of the micro- and nanostructure of the materials and being less resource consuming.

This object has been achieved by a method for preparing a micro-structured material, comprising: a) providing a stable particle-stabilized multiple emulsion comprising at least three phases; at least one of the phases, but not all of the phases, comprising monomer units; and b) polymerizing the monomer units in the intact stable particle-stabilized multiple emulsion, wherein the multiple emulsion is a w/o/w, o/w/o, w/o/w/o, o/w/o/w, o/o/o or a/l/l type emulsion.

As a micro-structured material in terms of the present invention, a material shall be understood having a structure in the micrometer range, meaning the range from 1 - 1,000 $\mu$m. This structure is the substructure of the material, for example its porosity.

For example, if the material comprises particles, micro-structured means particles having a diameter in the micrometer range. In the same way, if the micro-structured material is a foam, in particular a monolithic foam, this material is micro-structured by having pores and/or caves of a diameter in the micrometer range or having elevations from a surface having a height and/or diameter in the micrometer range.

However, by the definition given above, it is not excluded that a micro-structured material in terms of the present invention in addition has a even finer structure, namely a structure in the nanometer range, meaning a range from 0.1 to 1,000 nm. In general, the structure of the material prepared by the inventive method will be determined by the properties and dimensions of the respective particle-stabilized multiple emulsions on which the micro-structured material bases.

An emulsion is a mixture of two or more liquids that are normally immiscible. In an emulsion, one liquid (the dispersed phase) is dispersed in the other (the continuous phase). Two liquids can form different types of emulsion. As an example, oil and water can form, firstly, an oil-in-water emulsion, wherein the oil is the dispersed phase and water is the continuous phase. Secondly, they can form a water-in-oil emulsion, where water is the dispersed phase and oil is the continuous phase.

A multiple emulsion in terms of the present invention is an emulsion wherein the dispersed phase comprises an additional phase dispersed therein. That is, at least one of the emulsion phases is both a dispersed phase as well as a continuous phase. Such an emulsion can, for example, be of water-in-oil-in-water or of oil-in-water-in-oil type. Such kind of emulsion, consisting of three phases, shall be understood as "double emulsion" in terms of the present invention. Similarly, an emulsion comprising four different phases, such as water-in-oil-in-water-in-oil, shall be understood as "triple emulsion".

Often a stabilizing agent, such as a surfactant (meaning a substance having a hydrophilic and a hydrophobic side in case of water-in-oil-emulsions), is added into the emulsion to stabilize the emulsion. A particle-stabilized emulsion in terms of the present invention is an emulsion comprising particles, preferably nanoparticles, having hydrophilic as well as hydrophobic moieties used to stabilize the emulsion.

In case of emulsions not comprising an aqueous phase, such as oil-in-oil-in-oil emulsions, it is clear to a person skilled in the art that the terms hydrophilic and hydrophobic as used above are used analogously as "being attracted to one of the specific phases".

The phase comprising the monomer units can either, in case that a liquid monomer is used, only comprise the monomer units or, in case of presence of further substances, such as functional additives, the monomer as a solvent. In the same way, it is possible that the monomer units (and further ingredients) are dissolved in an appropriate solvent.

The phase(s) comprising the monomer units can, if appropriate, additionally comprise polymerization initiators, such as AIBN or Irgacure. An appropriate initiator to be used can be easily selected from a person skilled in the art. Initiators known in the art will be selected depending on the nature of the monomer units.

Polymerization can be initialized, for example, thermally or by appropriate irradiation.

Preferably, the micro-structured material is a particulate material or a porous, monolithic material.

Morphology of the particulate material or of the porous, monolithic material can be controlled by tailoring either the volume fraction of the dispersed phase of the primary simple emulsion or the volume fraction of the primary emulsion in the final double or triple emulsions.

A particulate material in terms of the present invention is a material substantially comprising particles. Preferably, the particles are spherical particles. However, any alternative particle shape, such as ellipsoidic, cubic, tubes etc. is also met by this term. The particles itself can be porous or, in general, substructured. That is, a variety of micro-particles each having the structure of a porous foam material shall also be considered as particulate material.

A porous, monolithic material in terms of the present invention shall be understood as a material substantially only consisting of only one piece, having pores, caves, openings, gaps, etc. The pores, caves etc. substantially have sizes in the micrometer range.

Even preferred, the multiple emulsion is a w/o/w, o/w/o, w/o/w/o, o/w/o/w, o/o/o or a/l/l type emulsion. In this context, w means water, o means oil, a means air and 1 means liquid. In this regard, the term oil refers to non-aqueous liquids, preferably liquid organic compounds, such as solvents etc. Those skilled in the art will understand that, of course, the one liquid being dispersed and the other liquid (continuous phase) are not miscible. Thus, in case of oil-in-oil-in-oil emulsions, oils significantly differing in their polarity will be used.

Preferably, the particles used for stabilizing the particle-stabilized multiple emulsion are particles having a diameter from 1 - 100 nm, preferably 10 - 50 nm, most preferably 10 - 30 nm; and having hydrophilic groups located at the particle surface and/or hydrophobic groups located at the particle surface; wherein the particle-stabilized multiple emulsion comprises particles having surface hydroxyl group content from 23 to 50%; or two different sorts of particles differing in their ratio of hydrophilic groups to hydrophobic groups.

In general, the size of the particles used for stabilizing the particle-stabilized multiple emulsion is not limited. However, since oversized particles will cause formation of particularly large cells in the emulsion (or even will suppress emulsion formation), particles having a diameter in the stated range are preferred to obtain micro-structured materials.

Since the energy of attachment of particles to oil-water interfaces is very high (thousands of kT/particle), such particles are held very strongly in the interface giving rise to extremely stable drops within emulsions. A key parameter influencing the type of emulsion formed is the wettability of the particle, quantified in terms of the contact angle $\theta$ (through water) it makes at the oil-water interphase. If the particle is relatively hydrophobic, $0 < 90°$, oil-in-water emulsions are preferred. If the particle is relatively hydrophobic, $\theta > 90°$, water-in-oil emulsions are preferred. Energy of attachment of particles at w/o interface is given by:

$$E = \pi R^2 \gamma_{ow} (1 \pm \cos \theta)^2$$

where R, $\gamma_{ow}$, $\theta$ represent radius of particle, oil-water interfacial tension and contact angle, respectively. The sign in the bracket is positive for the removal of particles into oil and negative for removal into water. (S. Levine et al. Colloids Surf. A, 38 (1989), p. 325.)

Preferably, particles will be used for stabilization having hydrophilic as well as hydrophobic groups on the surface of each single particle. Particles mainly having hydrophobic surface groups will favour the formation of water-in-oil emulsions, meaning that water is the dispersed phase and oil the continuous phase. Alike, particles mainly having hydrophilic surface groups will favour formation of oil-in-water emulsions.

Preferably, the particles are silicium dioxide particles and/or laponite particles.

Even preferred, the hydrophilic groups are hydroxyl groups.

Further preferred, the hydrophobic groups are alkyl silyl ether groups, preferably methyl silyl ether groups.

Preferably, particles used to prepare oil-in-water emulsions have a content of free surface hydroxyl groups of more than 55%. Even preferred, particles used to prepare water-in-oil emulsions have an amount of free surface hydroxyl groups of less than 55% less. The 55% borderline for switching from stabilization of w/o to o/w emulsions shall be understood at hint instead of being unshakeable. Concrete values will depend on the nature of the individual system, in particular on the type of liquids used, contact angles, etc.

In general, each polymerizable compound can be used as monomer unit in the present invention. These compound can comprise two or more polymerizable groups.

Preferably, the monomer units are 1,6-hexanediol diacrylate, styrene, divinylbenzene or mixtures thereof.

Preferably, at least one phase comprises a functional additive.

Preferably, the functional additive is selected from metal particles, preferably zinc nanoparticles, metal oxide particles, preferably iron oxide particles, a fluorescent material, preferably CdTe-quantum dots, a biological material, preferably sporopollenin, or dyes, such as Rhodamin B.

Of course, more than one functional additives can be comprised. That is, that one phase (or more than one phase) comprises a mixture of different functional additives. Also in accordance with the invention is that different phases each comprise one (or more than one) functional additives.

The nature of further functional additives which may be comprised is, in general, not limited. The multiple compartment of the current material allows to incorporate a wide range of water or oil soluble materials. Even salt hydrates and their crystals can be incorporated in water phase as they are phase changing materials (PCM) for thermal energy storage.

The problem underlying the present application has further been solved by a micro-structured material obtainable by the inventive method.

Surprisingly, it was found that the micro-structured material according to the present invention solves the problem by overcoming drawbacks of the prior art, in particular by having improved chemical and physical properties, such as mechanical and thermal stability. Further, it was surprisingly found that the new micro-structured material can be prepared in an easy way with good structure control from well stabilized multiple emulsions by using particularly low amounts of stabilizer. Finally, it was surprisingly found that the particles used to stabilize the particle-stabilized multiple emulsions can greatly enhance the properties of the micro-structured materials prepared therefrom.

In the present invention, drawbacks known from the prior art regarding non-aqueous emulsions, particularly the difficult o/o/o type, were surprisingly overcome by simple way using at least a single type of solid nanoparticles, mainly hydrophobic. Also all the inherent instability of surfactant stabilized emulsions via mixing at interfaces or formation of micelles was avoided.

The novel approach to make micro-structured materials from multiple emulsions allows a wide range of industrial applications due to the great stability and simplicity in preparation. In addition, the preferably embedded inorganic nanoparticles will give these multiple compartments a versatile functionality, such as optical, magnetic and fluorescence properties. The prepared materials can also be used as microreactors or fine templates for synthesising advanced materials and therefore adding a new dimension to Pickering multiple emulsions.

Additional features and advantages of the present invention will become apparent in the following detailed description on the basis of examples with reference to the figures, wherein

Fig. 1 shows optical and fluorescence images of multi-core polymer microparticles;

Fig. 2 shows fluorescent, optical and SEM images of emulsions and hybrid polymeric microparticles with different morphologies;

Fig. 3 shows optical and SEM images of the precursor double w/o/w emulsion before polymerization and multi-hollow polymer microparticles prepared from this emulsion;

Fig. 4 shows optical and SEM images of polyHIPE;

Fig. 5 shows SEM images of polyHIPE-7 and digital image of a monolith formed thereof;

Fig. 6 shows SEM of a hierarchical porous polyMIPTE-8 structure;

Fig. 7 shows SEM images of different sections of polyMIPTE-8 formed from polymerization of pre-made water-in-styrene-in-water-in-styrene triple Pickering emulsion;

Fig. 8 shows optical, fluorescent and digital images of Pickering parent (or precursor) triple emulsions and poly(w/o/w/o) formed by polymerization;

Fig. 9 shows TGA analysis of polyMIPDE-3 and polyHIPE-4;

Fig. 10 shows optical micrograph and SEM images of an o/o/o styrene-in-glycerine-in-styrene non-aqueous emulsion;

Fig. 11 shows optical and fluorescent images for double o/o/o formamide-in-styrene-in-formamide emulsion;

Fig. 12 shows optical micrographs of an o/o/o clove-in-glycerine-in-clove double emulsion;

Fig. 13 shows optical micrographs of o/o/o glycerine-in-clove-in-glycerine double emulsions;

Fig. 14 shows optical micrographs of magnetic simple and double o/o/o emulsions;

Fig. 15 shows optical micrographs of o/o/o glycerine-in-castor-in-glycerine double emulsion two months after preparation;

Fig. 16 shows optical micrograph of glycerine-in-silicon oil-in-glycerine double emulsion at different magnifications two months after preparation; and

Fig. 17 shows optical micrograph of o/o/o silicon oil-in-glycerine-in-silicon oil double emulsion at different magnifications two months after preparation.

Fig. 18 shows optical images for examples of particle-stabilized (air-in-liquid-in-liquid) multiple emulsions non-aqueous systems with volume fraction of foam around fa/g = 0.3.

## **Examples**

### **Overview**

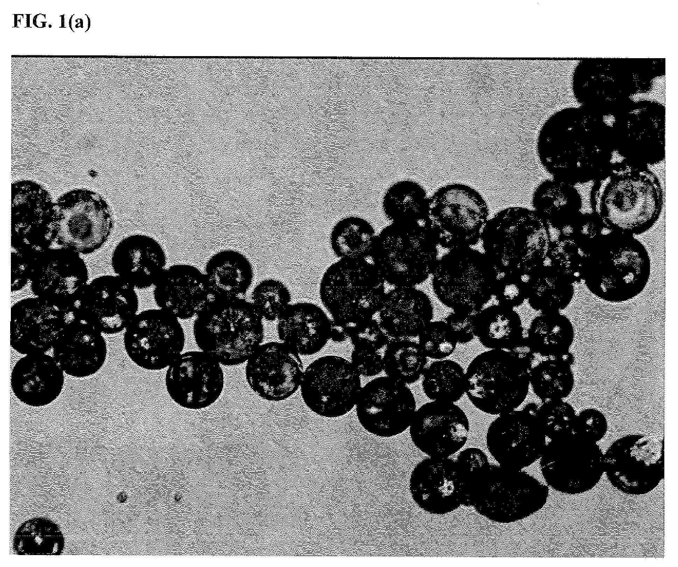

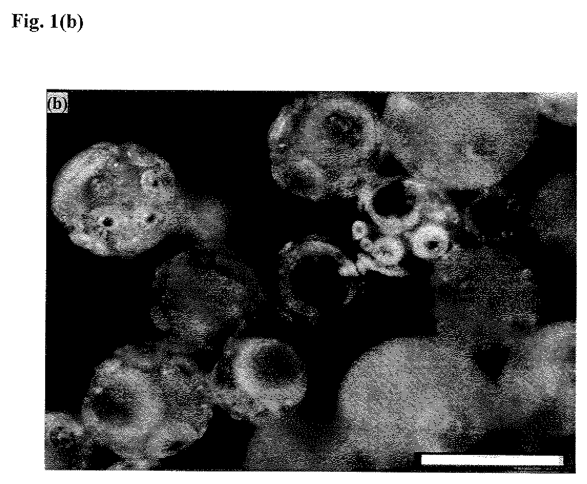

Two types of silica nanoparticles only differing in their hydrophobicites were used to stabilize the aqueous double and triple emulsions. Double emulsion of the type w/o/w was first prepared with 1,6 hexanediol diacrylate (HDDA) or styrene as a monomer oil phase with 1 wt.% divinylbenzene (DVB) as a crosslinker. The inner water phase, having a volume fraction of $\phi_w$ = 0.2, of the double emulsion was loaded with 1 wt.% $Fe_3O_4$ magnetite nanoparticles and 1 mg/ml CdTe quantum dots. The primary w/o emulsion was stabilized by 3 wt.% of partially hydrophobic 50% SiOH silica nanoparticles (based in oil phase) and was used with volume fraction of $\phi_{w/o}$ = 0.2 in the preparation of the double w/o/w emulsion in the second step. The oil globules of the w/o/w emulsions was stabilized by 2 wt.% hydrophilic 80% SiOH silica nanoparticles based in the outer water phase. This resulted double emulsion is designated as low internal phase double emulsion (LIPDE), since $\phi_{w/o}$ = 0.2 were used. The formed LIPDE was photopolymerized for 3.5 hours using 2 wt.% (based on monomer weight) of Irgacure 184 at room temperature. PolyLIPDE-1 multi aqueous core spherical microparticles with size range of 20-50 $\mu$m in diameter were obtained with magnetic and fluorescent properties Fig.1.

**Fig. 1(a)** shows (left) optical and (right) fluorescence images of multi-core polymer microparticles (polyLIPDE-1) formed after UV polymerization of a w/o/w double emulsion of HDDA stabilized by 3 wt.% of 50% SiOH silica particles in the inner phase, $\phi_w$ = 0.2, containing 1 mg/ml CdTe quantum dots and 1 wt.% $Fe_3O_4$. The oil globules were stabilized by 2 wt.% of 80% SiOH silica particles, $\phi_{w/o}$ = 0.2. The scale bar is 50 $\mu$m. **Fig. 1(b)** is a fluorescent image of the polymer polyLIPDE-1.

Silica and laponite nanoparticles preparation

Fumed silica nanoparticles were produced according to the prior art by the introduction of volatile chlorosilanes into an oxyhydrogen flame and consist of ultrapure amorphous silicon dioxide. The nanoparticles had a mean primary particle diameter of approximately 20 nm and were coated to different extents with dichlorodimethylsilane (DCDMS). Particle wettability was characterized in terms of the measured percentage of unreacted SiOH groups remaining on the surface using a base titration method. (US 2003/0175317 A1). This ranged from 100% (most hydrophilic) to 14% (most hydrophobic). The coated silica nanoparticles with measured values of % SiOH were kindly supplied by Wacker-Chemie (Germany). Although the primary particle diameter was 20 nm, the powder also contained fused aggregates of multiple primary particles and larger agglomerates of the fused aggregates. Laponite (RD) clay nanoparticles were provided by (Southern Clay Products Texas, USA). Hydrophobic Laponite nanoparticles, were obtained according to the cation exchange method described elsewhere. In a round flask 20 g of Laponite clay were dispersed in 500 ml distilled water containing 6 g, 65 x $10^{-4}$ M of CTAB, which caused complete cation exchange, at room temperature then the temperature was increased to 80 °C under vigorous stirring for 6 - 8 hrs with a condenser. The resulting modified Laponite clay was separated by filtration and washed several times with distilled water to remove any free surfactant (checked by $AgNO_3$

solution) then vacuum dried at 60 °C for 24 hrs and kept in a sealed container until use.

Preparation of double Pickering w/o/w emulsions

Double w/o/w emulsions were prepared using a two-stage process.

Stage 1 involved the preparation of a simple w/o emulsion, in which the volume fraction of water ($\phi_w$) equals 0.2. It was prepared by adding 2.5 cm$^3$ of water into 10 cm$^3$ of monomer oil containing a known mass of hydrophobic silica nanoparticles of 50% SiOH. The mixture was then homogenized using a DI-25 basic Yellow-line, IKA (Germany) homogenizer (rotor-stator) with an 18 mm head operating at 13,000 rpm for 2 minutes. Water phase of the primary w/o emulsion can be loaded, as required, with 1mg/ml CdTe quantum dots and 1 wt.% magnetite $Fe_3O_4$ nanoparticles. The oil phase of the primary w/o emulsion contains, as required, 2 wt.% (based on oil mass) AIBN or Irgacure 184 and 1 wt.% DVB (based on oil mass).

In stage 2, the primary w/o emulsion, just prepared in stage 1, is re-emulsified into 10 cm$^3$ of an aqueous phase containing a known mass (expressed in wt.% of the continuous phase) of hydrophilic silica nanoparticles of 80% SiOH (using the homogenizer at 8,000 rpm for 10 seconds). The volume fraction of the w/o emulsion ($\phi_{w/o}$) in the final double emulsion can be varied from 0.1 - 0.6. In some cases, the second step of homogenization was carried out simply by hand shaking for 10 seconds. The emulsion continuous phase was determined by measurement by observation of what happened when a drop of emulsion was added to a volume of each of the pure liquid phases. The emulsions only dispersed in the liquid when its continuous phase matched the liquid to which it was added.

Polymerization of the prepared emulsions

The as prepared Pickering double w/o/w emulsions of either 1,6-hexanediol diacrylate (HDDA) or styrene as monomer oil were either photo- or thermally polymerized without stirring after bubbling in pure $N_2$ gas for 5 minutes. Polymerization was started by placing the double emulsion in a UV cell under a 12W UV lamp (UVP, Upland, USA) for 3.5 hours. Thermal polymerization was started by heating the system to 75 °C for 24 hours in glass vessels (diameter around 25 mm) to complete the polymerization reaction without stirring. Finally, microparticles were recovered by washing three times with ethanol and then with Milli-Q water to remove any unreacted oil and excess of stabilizers.

Preparation of triple Pickering w/o/w/o emulsions

Triple Pickering w/o/w/o emulsions were simply prepared by re-homogenize by hand shaking for 10 second the double w/o/w emulsions described above in the outermost monomer oil (styrene) phase containing 2 wt.% AIBN and a known mass of solid nanoparticles. Triple emulsions were polymerized in the same way as described for double emulsions above.

Preparation of high internal phase emulsions (HIPES)

The HIPEs were prepared by adding the required volume of aqueous phase (containing 0.3 M $CaC_2H_2O$) or non-aqueous phase (without salts) to (50:50) styrene:DVB mixture (containing 2 wt.% AIBN initiator and a known mass of the desired solid nanoparticles (based on monomer oil mass). The mixture was stirred by a standard magnetic stirrer at fixed speed of 400 rpm for 10 minutes. Viscous MIPE or HIPE were obtained and a drop test was performed to ensure the oil is the continuous phase. The resulted MIPE or HIPE were transferred into glass vessels and heated in a water bath at 75°C for 24 hours to produce polyMIPE-HIPEs. The formed monolith was released from vessels by breaking the glass and then purified in acetone using Soxhlet extraction for 3 hours and eventually dried at 100°C for 24 hours. Porous microstructure was studied by SEM.

Dual function microparticles prepared as described above show a response to an external magnetic field generated by using a Neodymium magnet. One can see, from different angles, the internal aqueous drops are embedded inside the polymeric microparticles, indicative of the existence of these drops totally within the polymerized oil globules. Fluorescence behaviour of the multi-cores inside these microparticles was noticed which further confirms the integrity of the structure before and after polymerization.

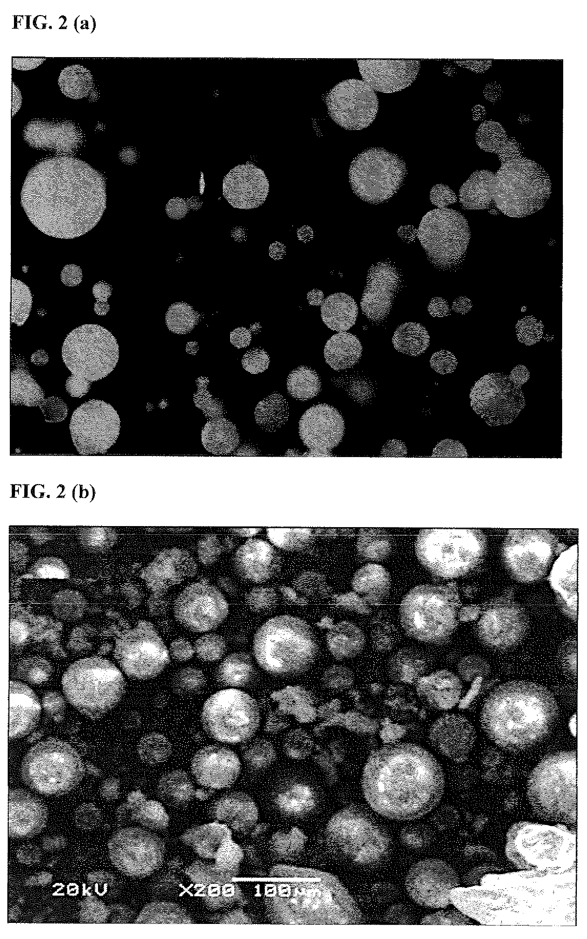

In similar way, other dual function microparticles were prepared (polyLIPDE-2) using styrene as the monomer oil globules which were polymerized thermally at 75°C using (AIBN) for 24hrs. The morphology of the formed emulsion and hybrid microspheres were examined using fluorescent and SEM microscopy as shown in Fig 2a-c.

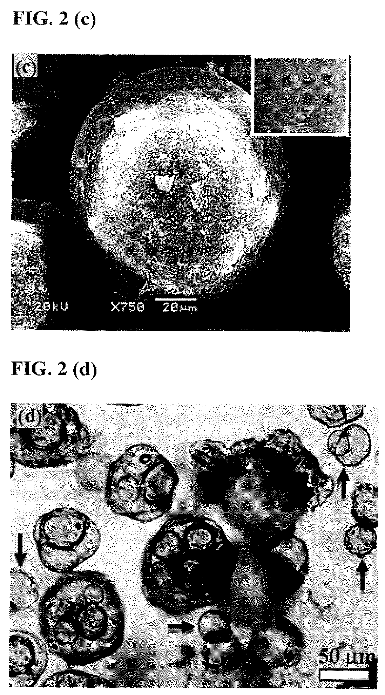

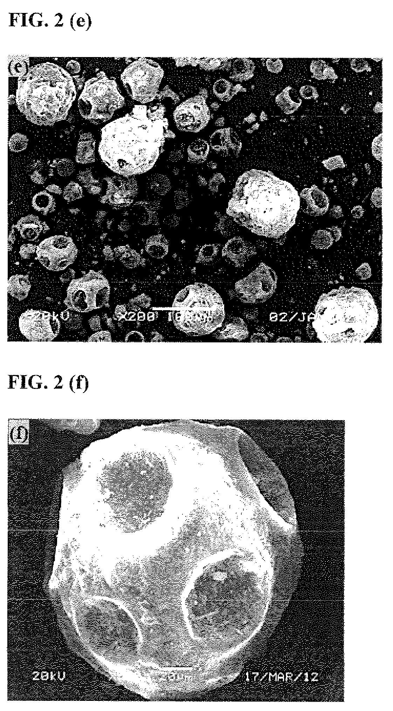

**Fig.** 2 shows fluorescent, optical and SEM images of emulsions and hybrid polymeric microparticles with different morphologies. (a) A fluorescence image of a double w/o/w emulsion of styrene stabilized by 3 wt.% of 50% SiOH silica particles in the oil phase, $\phi_w = 0.2$. The inner water phase contains Rhodamin B and 1 wt.% $Fe_3O_4$. The outer aqueous phase contains 2 wt.% of 80% SiOH silica particles, $\phi_{w/o} = 0.2$. (b, c) SEM images of multi-core polymeric spherical microparticles (polyLIPDE-2) formed from a w/o/w double emulsion of styrene as in "a" after thermal polymerization. (d) An optical image for a double w/o/w emulsion prepared as in 'a' but with volume fraction of primary emulsion of $\phi_{w/o}$ = 0.5, showing large inner water drops and the non-spherical morphology. The arrows indicate a possible colloidosomes formed from the released water drops from inside the multiple emulsion globules (e, f) SEM images of the porous microparticles (polyMIPDE-3) formed from polymerization of the precursor double w/o/w emulsion shown in "d".

The first notice was that the resulted stable w/o/w emulsion exhibited high loading capacity of the inner water drops compared to that prepared with HDDA. It was found that the microparticles (25-65 $\mu$m) were also spherical having multi-core compartment and silica aggregates were seen covering significant parts of their surfaces. The inset of Fig. 2c shows a closer look at the surface morphology of one microparticle where the existence of silica aggregates that stabilized the outer oil-water interface of the precursor w/o/w double emulsion is evident.

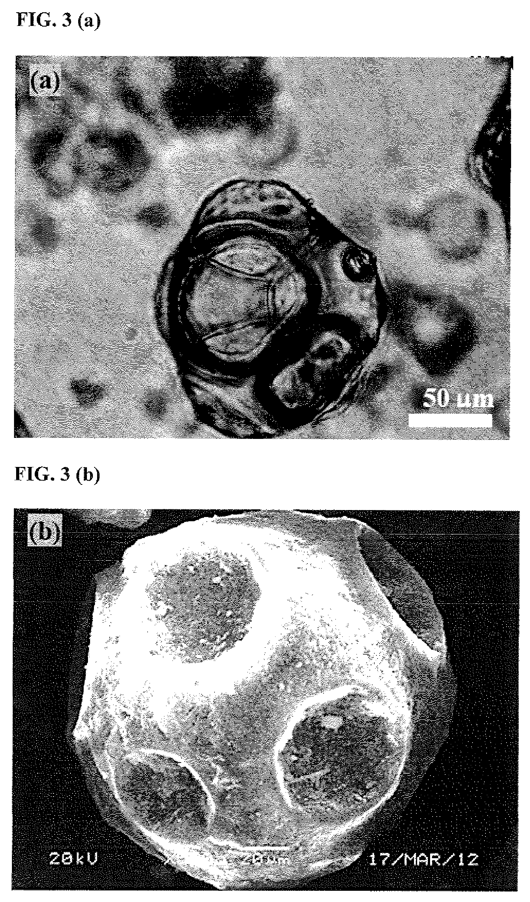

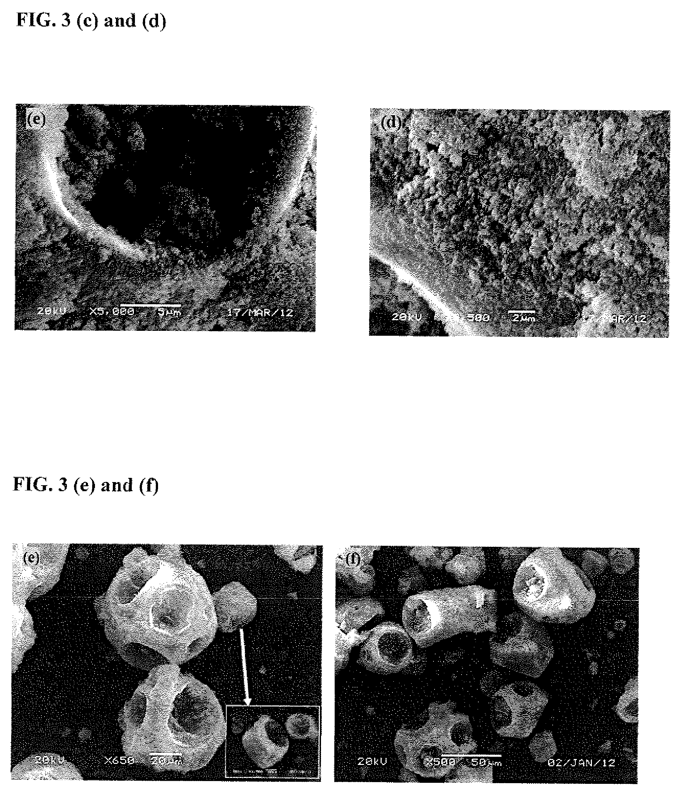

Interestingly, different non-spherical morphology, namely multi-hollow or porous structure, of the microparticles (polyMIPDE-3) were observed when the precursor w/o/w emulsion was prepared with volume fraction of the primary w/o emulsion of $\phi_{w/o}$= 0.5 as depicted in optical and SEM images in Fig. 2 d-f and Fig. 3.

**Fig**. 3 shows (a) an optical image of the precursor double w/o/w emulsion before polymerization. The emulsion was stabilized by 3 wt.% of 50% SiOH silica particles in the oil phase of primary emulsion, $\phi_w$ = 0.2, containing Rhodamin B and 1 wt.% $Fe_3O_4$. The outer aqueous phase was stabilized by 2 wt.% of 80% SiOH silica particles, $\phi_{w/o}$ = 0.5. (b-f) SEM images of multi-hollow polymer microparticles prepared from a w/o/w double emulsion of styrene as in (a) after thermal polymerization.

It is obvious from Fig. 2d that the fabricated multiple emulsion exhibited unique morphology where the internal water drops are remarkably swollen and existed in few numbers entrapped in oil globule. These arrangements provided a non-spherical character of the oil globules where a few large water drops can be seen going out of the oil globules.

In addition, we noticed the existence of a number of spherical drops in the formed emulsion that resemble water colloidosomes which were indicated by arrows in Fig. 2d. These drops showed an apparent rough surface morphology compared to that of oil globules. It can be assumed that these possible "water colloidosomes" have been released from inside the swollen oil globules where they already been covered with a dense layers of hydrophobic silica particles used in stabilising them inside the oil globules. When they came out to the outer water phase they did not merge since they covered with hydrophobic silica and also they became dispersed in water phase containing hydrophilic silica. As seen in Fig. 2e, each polymer microparticle contains a number of open pores having sizes ranging from 20-40 $\mu$m in diameter, while the microparticle sizes range was 30-90 $\mu$m.

Few other shapes were realised such as pot and cylindrical-shaped microparticles with single or multiple large pores, respectively (Fig. 3). The BET surface area of these porous microparticles was 9.6 $m^2$/g which is in the range of some of the reported surfactant-stabilized millimetre-sized porous beads.

The mechanism of the formation of such porous morphology shown here is not exactly known. However, a series of experiments was performed where we changed the volume fraction of the primary w/o emulsion (from $\phi_{w/o}$ = 0.1-0.6) in the double w/o/w emulsions. It transpired that the double w/o/w emulsions were catastrophically phase inverted between $\phi_{w/o}$ = 0.5 and $\phi_{w/o}$ = 0.6 to simple w/o emulsions. This novel phase inversion has not been explored before for Pickering multiple emulsions. Upon polymerization the inverted emulsion formed at $\phi_{w/o}$= 0.6, a solid polymer monolithic material was formed confirming that the monomer oil is the continuous phase of the emulsion. In this case, one can say that the inversion of the w/o/w emulsion lead to formation of a medium internal phase simple emulsion (MIPE) which upon polymerization gives polyMIPE.

For the resulted w/o/w emulsion with $\phi_{w/o}$= 0.5, the effective water volume fraction would be 0.6 which is within the region of the phase inversion process. Based on the early concept of Ostwald, who stated that phase inversion occurs in simple emulsions when the system reaches a critical close packing condition, Brooks and Richmond argued that, by multiple emulsion formation, the effective volume fraction of dispersed phase required to induce inversion can be obtained by enclosing the continuous phase into drops of the dispersed phase. This occurs as a result of the coalescence of drops of the dispersed phase. The effective volume fraction of dispersed phase (made up of droplets inside globules) thus increases as long as this inclusion dominates over loss of such enclosed droplets by, say, dissolution back into the continuous phase. Inversion is thus governed by the balance between the breakup of bulk liquid/drops and the coalescence of drops. This can shed some light about the mechanism of the formation of such porous microparticles shown in (Fig. 2 d-f).

It can be assumed that this could be as a result of inclusion of part of the continuous water phase into the oil globules, which in turn enhances coalescence and eventually lead to swelling of the inner water droplets of the w/o/w emulsion during the start of the phase inversion process as evident from optical image shown in Fig 2d.

It is worth mentioning that the number of pores in each single microparticle was few (~1-10). In addition, the average size of these porous microparticles was relatively larger, by 25 $\mu$m, than that prepared with low volume fraction ($\phi_{w/o}$= 0.2) of the primary emulsion (Fig. 1, Fig. 2a-c). This trend was expected since globule sizes normally increase upon increasing the volume fraction of the inner phase of silica-stabilized multiple emulsions.

Another possible factor that could help increasing the globule sizes is the coalescence of small water drops inside the globules, forming larger few ones. Moreover, based on our previous studies on the release from Pickering multiple emulsions, the swelling of water drops can also be driven by changing the osmotic pressure across the middle oil film in a controlled way using simple salt and glucose solutions.

Preparation of porous monolithic materials

The findings described above gave motivation to use the fumed silica with and without zinc metal particles or Laponite nanoparticles to prepare porous monolithic materials with added functionalities from suspension polymerization of Pickering emulsions.

Preliminary experiments were conducted where a w/o emulsion was prepared having water volume fraction of $\phi_w$ = 0.8 using 3 wt.% of the very hydrophobic 23% SiOH silica nanoparticles initially dispersed in the oil phase. The monomer oil phase was a mixture of styrene/DVB in (50:50) volume ratio containing 20 vol.% toluene (as pores generator) and 2 wt.% AIBN (based on total oil mass). The aqueous phase was added dropwise to the oil phase with constant stirring speed at 400 rpm. The resulted emulsion type was w/o, confirmed by the drop test. The emulsion exhibited fast coalescence which resulted in a significant release of most of the initial oil volume after 30 minutes.

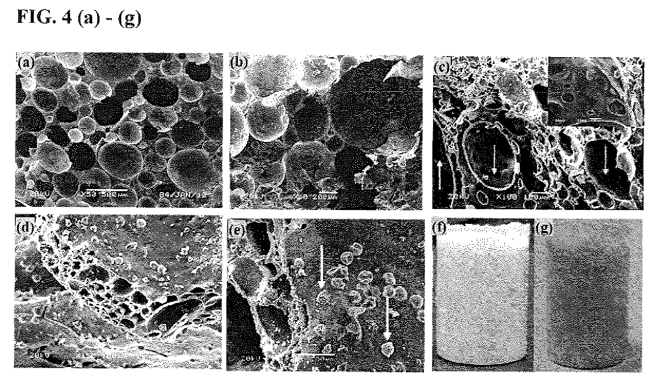

After polymerization at 75°C for 24 hrs, a monolith was obtained with millimetre size cells that can be seen by naked eyes. Stable w/o HIPE containing internal water volume fraction of 0.8 were prepared with 3 wt.% of 50% SiOH silica nanoparticles initially dispersed in the oil phase. After polymerization of the stable HIPE, porous polyHIPE-4 (Fig. 4a) with few open and mostly closed cells was obtained.

**Fig. 4** shows (a) SEM image for polyHIPE prepared from Pickering HIPE stabilized by 3 wt.% of 50% SiOH silica and $\phi_w$ = 0.8. (b) PolyHIPEs prepared with 1.5 wt% organo-modified Laponite and $\phi_w$ = 0.8. (c) PolyHIPEs prepared with 3 wt% organo-modified laponite and $\phi_w$ = 0.8 showing interconnected pores by arrows. (d) PolyHIPEs prepared with 3 wt% organo-modified Laponite doped with 1 wt.% sporopollenin and $\phi_w$ = 0.8. (e) Close look at large cell as in (d). (f) A monolith obtained from HIPE prepared with 3 wt.% silica. (g) A monolith as in "f" but with 3 wt.% organo-modified Laponite.

Pore sizes were found to be in the range of 150-500 $\mu$m in diameter. As summarised in Table 1, BET surface area of the formed monolith was very low, 0.02 m$^2$/g. The formed HIPE with 50% SiOH silica did not show sedimentation or coalescence over a period of 48 hrs indicative of the effectiveness of this type of silica in stabilising the water drops.

Preparation of polyHIPES with high internal water volume

The investigation was extended to prepare new polyHIPEs using organo-modified disk-shaped Laponite nanoparticles with different concentrations (1.5 and 3 wt.%) as shown in Fig. 4b,c with internal water volume fraction of $\phi w$ = 0.8. Laponite clay was modified using cetyltrimethylammonium bromide (CTAB) according to the method described elsewhere.

Stable Pickering HIPE was initially formed with $\phi_w$ = 0.8. Upon polymerization, polyHIPE-5 having large closed cells were formed with 1.5 wt% modified Laponite. Pore sizes were found to be in the range of 200-1000 $\mu$m and the formed monolith was very brittle. Open, closed and some interconnected cells were observed when the HIPE was stabilized by 3 wt.% of the modified Laponite Fig. 4c. The resulted polyHIPE-6 exhibited more mechanical stability (tested by hand) compared to that obtained with 1.5 wt.% Laponite. As noted in Table 1, both polyHIPE-5/6 showed different average pore sizes, but their surface areas were comparable.

An attempt was made to prepare w/o HIPE with the unmodified Laponite particles, but phase separation has occurred immediately since these particles prefer to be completely wetted by the aqueous phase.

Preparation of sporollenin materials

In order to widen the applications of the formed polyHIPEs and increase their functionalities, natural sporopollenin empty microcapsules were incorporated in the oil phase of the HIPE before polymerization. Sporopollenin has long been recognised as suitable for microencapsulation of a variety of inorganic and organic materials and were used and treated as described by Paunov et al. J. Mater Chem. 2011, 21, 18018. Figs. 4 d, e, g show the porous structure formed by doping the HIPE with sporopollenin and it is obvious that many of these microcapsules were embedded within the polymer matrix of the resulted PolyHIPE foams, hence adding more sites capable of further functionalization. These porous monoliths can find possible applications in separation, enzyme immobilisation or even in gas storage.

Functionalization of polymer cells/matrix

Further, the possibility of adding a different functionality to the polyHIPE via the incorporation of particles of zinc metal in the polymer cells or matrix was explored. This could provide a kind of conductive porous materials and/or a possible use of zinc particles as templates for other applications such as adsorption or catalysis.

The w/o HIPE was prepared in similar way as in polyHIPE-4 shown in Fig. 3a but with the inclusion of 2 wt.% of zinc metal particles to the oil phase before the mixing step. The resulted HIPE was viscous and did not exhibit sedimentation or coalescence for the time of the experiment.

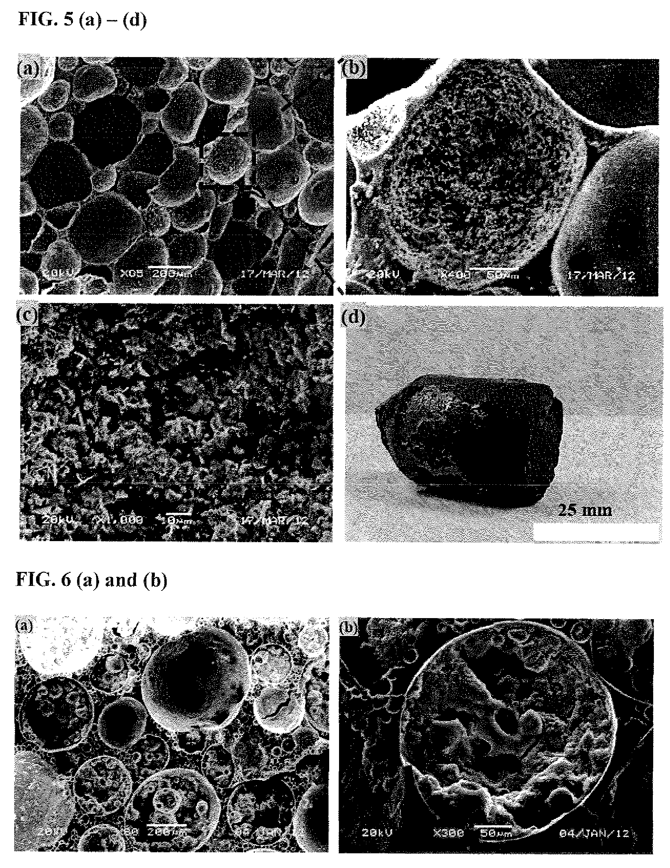

**Fig. 5** shows the obtained zinc functionalised polyHIPE-7 with pore sizes ranging from 100 - 300 $\mu$m which is comparable to that obtained for the same monolith but without zinc particles (polyHIPE-4); (a-c) SEM images for polyHIPE-7 prepared from Pickering HIPE stabilized by 3 wt.% of 50% SiOH silica nanoparticles and 2 wt.% zinc particles, $\phi_w$ = 0.8. (b) Digital image of the monolith formed as in (a).

As it can be seen in Fig. 5a-c, mostly closed cells were obtained with the evidence of the existence of zinc metal particles as aggregates inside many cells' surfaces having sizes in the range of 2-10 $\mu$m. In addition, the grey colour of the obtained monolith ensures the incorporation of zinc (Fig. 5d).

Preparation of particle/foam hybrid materials

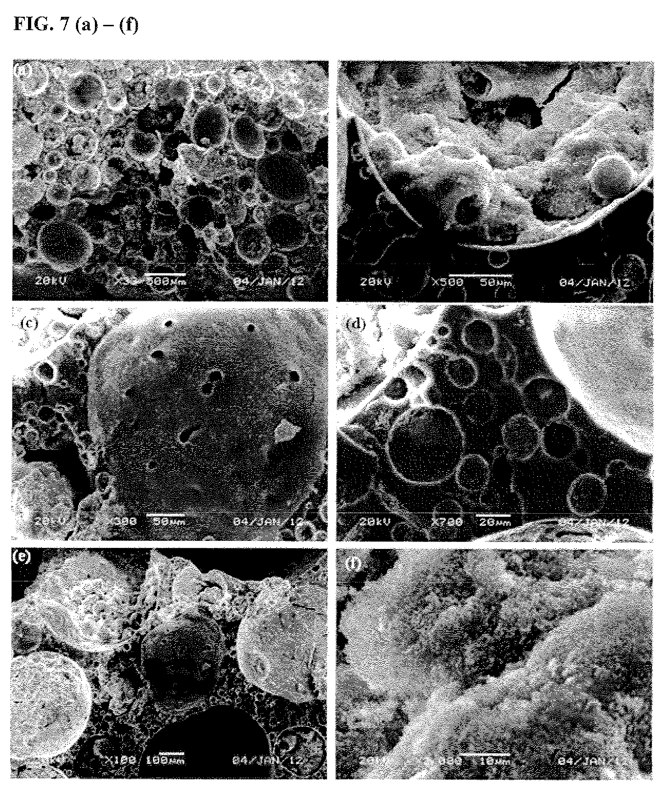

Having prepared polymeric materials ranging from porous microparticles to solid foams, the possibility of including both structures in on single system based also on Pickering emulsions was explored. In this respect, for the first time a method for fabrication of novel porous hierarchical structures based on polymerization of Pickering w/o/w/o triple emulsions, as shown in Fig. 6a, b and Fig. 7, was developed and demonstrated.

**Fig. 6** shows (a) SEM of the hierarchical porous polyMIPTE-8 structure formed from polymerization of pre-made water-in-styrene-in-water-in-styrene (w/o/w/o) triple Pickering emulsion stabilized by 3 wt.% of 50% SiOH silica nanoparticles in the inner oil phase, and 2 wt.% of the same silica type in the outer oil phase. Oil globules were stabilized by 2 wt.% of 80% SiOH silica based in second water phase. The first water phase contains Rhodamin B and 1 wt.% $Fe_3O_4$. The first oil phase contains 1 wt.% DVB and 2 wt.% AIBN, both based on monomer mass. The outer second oil phase contains only 2 wt.% AIBN in addition to the silica. The volume fraction of the phases were, $\phi_w$ = 0.2, $\phi_{w/o}$ = 0.5 and $\phi_{w/o/w}$ = 0.5. (b) A focus on one large water globule (cell).

**Fig. 7** shows (a-f) SEM images for different sections of polyMIPTE-8 formed from polymerization of pre-made water-in-styrene-in-water-in-styrene triple Pickering emulsion stabilized by 3 wt.% of 50% SiOH silica nanoparticles in the inner oil phase, and 2 wt.% in the outer oil phase. Oil globules were stabilized by 2 wt.% of 80% SiOH silica based in second water phase. The first water phase contains Rhodamin B and 1 wt.% $Fe_3O_4$. The first oil phase contains 1 wt.% DVB and 2 wt.% AIBN, both based on a monomer mass. The outer second oil phase contains only 2 wt.% AIBN. The volume fraction of the phases were $\phi_w$ = 0.2, $\phi_{w/o}$ = 0,5 and $\phi_{w/o/w}$ = 0.5.

In this method, the emulsification of a Pickering double emulsion of the type w/o/w in a second oil phase was successfully achieved, simply by hand shaking. This allows to prepare a kind of stable microcapsules dispersed in another microcapsules, which is difficult to achieve with surfactant-stabilized emulsions. The double w/o/w emulsion shown in Fig. 2d was re-homogenized by hand shaking for 10 seconds in styrene phase containing 2 wt.% of 50% silica nanoparticles and 2 wt.% AIBN. The water volume fraction in the primary w/o emulsion was $\phi_w$ = 0.2, and the primary emulsion volume fraction in the double w/o/w emulsion was $\phi_{w/o}$ = 0.5 and finally the volume fraction of the double emulsion in the triple w/o/w/o emulsion was $\phi_{w/o/w}$ = 0.5. The resulted monolith, polymerized medium internal phase triple emulsion (polyMIPTE-8), was very hard to cut, without the help of extra tools, indicative of a high mechanical strength of the product.

In this unique structure, three distinct interfaces were realized which may rationalise many of the phenomena observed and the key parameters for excellent stabilization of solid-stabilized emulsions studied here. From the first look at the structure shown in Fig. 6a, b, one can realise the evidence of encapsulation of porous microparticles (30-90 $\mu$m) inside the large (200-800 $\mu$m) water globules (cells), which themselves were dispersed in the outermost oil phase. Also open and close cells at different depths fixed in the outermost polymer matrix can be seen. Both open and closed cells have a number of small pores having sizes of 10-40 $\mu$m (Fig. 7). The closed cells seem like colloidosomes where the shell is composed of density packed silica nanoparticles.

In addition, this polymerized (frozen) structure is a replica of the parent w/o/w/o emulsion shown in the optical image indicative of excellent coalescence stability of the parent emulsion even during polymerization at 75°C for 24 hrs.

The first interface represents the contact between the first water phase and the first oil phase, containing the hydrophobic silica, in the multi-hollow porous microparticles that formed from polymerization of a double w/o/w emulsion just before the phase inversion (Fig. 2 d-f). This interface can be represented as the hollow open pores formed in the polymerized double w/o/w emulsion. It is hypothesised that there are no more smaller water drops inside that double emulsion as all the smaller drops has merged to larger ones to form these open large pores.

The second interface is the contact between the first oil phase and the second water phase where the double emulsion is encapsulated in large water globules. It can be clearly seen how the excess of hydrophilic 80% SiOH silica nanoparticles, based on the second water phase, form aggregates inside the large water cells that surround the porous microparticles (Fig. 6b and Fig. 7). This "frozen" structure gives a good indication about the steric stabilization of these microparticles through the formation of 3D network of the stabilising silica.

The third interface is formed between the large water globules and the outermost oil continuous phase, again containing hydrophobic silica, where one can see the rough interface (shell) having average thickness of 1-1.5 $\mu$m, estimated from SEM. This interface separates hydrophilic and hydrophobic water and oil phases, respectively. Therefore, both types of silica nanoparticles might have been contributed in forming such a thick shell. For Pickering simple o/w emulsions studied by low temperature field emission electron microscopy (LTFE-SEM), it was concluded that the thickness of the interface was around 0.5 $\mu$m for oil drops stabilized by similar hydrophilic silica used in recent studies (B.P. Binks et al. Phys. Chem. Chem. Phys. 2002, 4, 3727).

This also supports the results obtained from the ellipsometric study of silica nanoparticles at a planar oil-water interface where it was concluded that a multilayer of silica particles is evident. (B.P. Binks et al., Langmuir, 2003, 19, 8888).

Interestingly, the third interface was generated by low energy homogenisation, namely hand shaking for 10 seconds. The existence of smaller pores having diameters between 10-40 $\mu$m located among the large cells was noticed (Fig. 6a and Fig. 7). These pores might be formed from the excess of small water drops that dispersed and silica-stabilized in the outermost oil phase during the final homogenisation step. It is worth mentioning that the parent w/o/w/o emulsion underwent sedimentation without coalescence leaving around 1/3 of the original oil (outermost phase) in top of the emulsion. Therefore the effective volume fraction of w/o/w in the polymerized triple emulsion was $\phi_{w/o/w}$ = 0.6, i.e. MIPTE was actually formed by spontaneous sedimentation. The results shown above suggest that the final structure can be controlled by either polymerize or unpolymerize the first/second water (oil) phases in the four phases triple emulsions (either w/o/w/o or o/w/o/w) to fabricate a wide range of different structures such as microcapsules in microcapsules, microcapsules in large hydrogels, porous materials and others.

**Table 1** Summary of the properties of the fabricated polymeric materials

| System | Stabilizer | Internal phase volume fraction | Average size of micropartide s/$\mu$m | Average size of pores/$\mu$m | BET surface area/m$^2$.g$^{-1}$ | Morphology |
|---|---|---|---|---|---|---|
| polyLIPDE-1 | 50% SiOH silica | $\phi_{w/o}$ (0.2) | 20-50 | --- | --- | multi-core |
| polyLIPDE-2 | 50% SiOH silica | $\phi_{w/o}$ (0.2) | 25-65 | --- | --- | multi-core |
| polyMIPDE-3 | 50% SiOH silica | $\phi_{w/o}$ (0.5) | 30-90 | 20-40 | 9.60 | porous non-spherical microparticles |
| polyHIPE-4 | 50% SiOH silica | $\phi_w$ (0.8) | --- | 150-500 | 0.02 | mostly closed cells |
| polyHIPE-5 | 1.5 wt.% Laponite | $\phi_w$ (0.8) | --- | 200-1000 | 7.90 | large closed cells-brittle |
| polyHIPE-6 | 3 wt.% Laponite | $\phi_w$ (0.8) | --- | 50-600 | 8.45 | open-closed interconnected cells |
| polyHIPE-7 | silica, zinc | $\phi_w$ (0.8) | --- | 100-300 | --- | mostly closed cells |
| polyMIPTE-8 | 50% SiOH silica | $\phi_{w/o/w}$ (0.5) | | 200-800 | 3.81 | porous microparticles in microcapsules |

Control

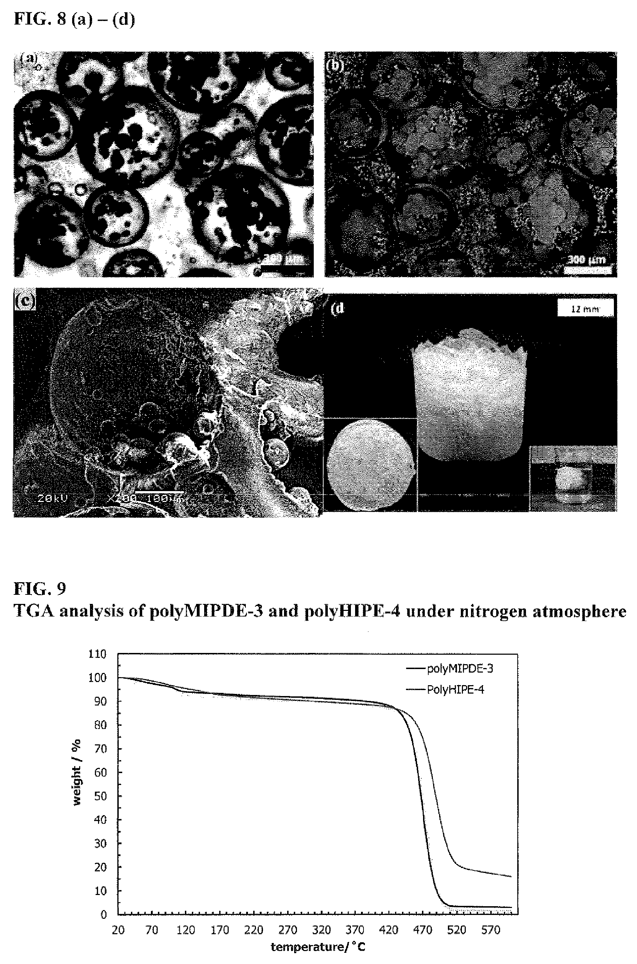

To test our hypotheses, we prepared a triple w/o/w/o emulsion in similar way as described above but lowering both the volume fraction of the primary w/o emulsion in the second water phase to $\phi_{w/o}$ = 0.2 and that of double emulsion ($\phi_{w/o/w}$= 0.3). Fig. 8a shows a fluorescent image of the obtained stable w/o/w/o triple emulsion.

**Fig. 8** shows optical and digital images for Pickering poly (w/o/w/o) formed from polymerization of premade water-in-styrene-in-water-in-styrene triple Pickering emulsion stabilized by 3 wt.% of 50% SiOH silica nanoparticles in the inner oil phase, and 2 wt.% in the outer oil phase. Oil globules was stabilized by 2 wt.% of 80% SiOH silica based in second water phase. The first water phase contains Rhodamin B and 1 wt.% $Fe_3O_4$. The first oil phase contains 1 wt.% DVB and 2 wt.% AIBN, both based on a monomer mass. The outer second oil phase contains 1 wt.% DVB and 2 wt.% AIBN, both based on a monomer mass. The outer second oil phase contains only 2 wt.% AIBN. The volume fraction of the phases were, $\phi_w = 0.2$, $\phi_{w/o} = 0.2$ and $\phi_{w/o/w} = 0.5$ (a) triple emulsion before polymerization, (b, c) fluorescent and SEM of the polymeric w/o/w/o material, (d) digital images for the monolith formed after polymerization of triple emulsion, showing low density as floated in pure ethanol.

The outer water globules showed diameters in the range of 100-400 $\mu$m and encapsulated many spherical double w/o/w emulsion globules. It is obvious from this fluorescent image that the encapsulated double emulsion are spherical and showed remarkable structure differences form that shown in Fig. 2d, where non-spherical structure was evident.

Therefore, selecting the desired volume fraction of the primary w/o emulsion in the double emulsion is crucial for the structure of the resulted emulsions as well as for the porous materials. The resulted structure after polymerization of the triple emulsion is shown in Fig. 8c. Large open cells were observed (100-500 $\mu$m) with few spherical microcapsules entrapped inside. Smaller pores were also seen in some of the large cells. It is obvious that different morphologies, size range and number of encapsulated microparticles were achieved by changing the $\phi_{w/o}$ of the primary w/o simple emulsion. It can be noticed from Fig. 8 that the number of microparticles inside the large cells are smaller compared to that of the triple emulsion prepared with higher $\phi_{w/o/w}$ which we expected from previous study with Pickering systems. These new triple emulsion systems could be used in potential applications either as non-polymerizable emulsions in its liquid phase or polymerized solid triple emulsions.

Materials from o/o/o emulsions

Additional, new materials prepared using the same strategy of solid stabilized emulsions (Pickering emulsions) but in the case with multiple emulsions with no aqueous phase, i.e., non-aqueous multiple (o/o/o) emulsions which have not been studied before using silica nanoparticles of different SiOH groups on their surfaces have been prepared. Also, it was possible to prepare these novel multiple emulsion using single type of silica nanoparticles where the normal procedure requires the use of two types of particles (one hydrophobic to stabilized the inner emulsion, w/o, and one hydrophilic to stabilized the outer phase, w/o/w according to our previous patent US2003/0175317 A1). In addition, polymeric materials from these new Pickering non-aqueous o/o/o emulsions as described below for representative examples were successfully prepared.

For the first time, single type particle stabilized o/o/o multiple emulsions are reported here utilizing different oils and stabilized by surface modified silica nanoparticles. The inner, middle and outer oil phases can be selected according to the desired application of the resulted materials. For example, stable non-aqueous multiple emulsions of some (non-polymerizable) edible oils like glycerine, castor oil, olive oil, clove oil and others like silicon oils were prepared.

Different materials can be loaded in any of the three oil phases in these novel multiple emulsions to fabricate multi-function materials. For example, one of the prepared multiple emulsions has been loaded with organically modified magnetite nanoparticles ($Fe_3O_4$) and/or dyes to allow a remote manipulation of such systems as possible drug delivery. This can allow control of the flow of emulsion droplets of the phase in capillaries which is important in microfluidic systems and also in the design of pulsatile drug release systems. Magneto- and electrorheological systems are of increasing interest in controlling the properties of delivery devices.

Generally, it was found that double o/o/o emulsions are better stabilized by a single silica particle type at either interface, namely the hydrophobic silica. Double o/o/o emulsions were prepared in two-stage method.

Stage 1 involved the preparation of a simple emulsion of the type o/o by adding a known mass of silica particles to one of the oil phases followed by the addition of the other immiscible oil phase then the mixture was homogenized using a rotor-stator homogenizer at 13,000 rpm for 3 minutes.

In stage 2, the primary o/o emulsion, just prepared in stage 1, is re-emulsified into another immiscible oil phase containing a known mass (expressed in wt.% of continuous phase) of solid nanoparticles. Most of double o/o/o emulsions were formed by hand shaking the primary o/o emulsions in the outer oil phase. However, in some cases the second homogenization step was performed using a homogenizer working at 8,000 rpm for 10 seconds. Selecting the volume fraction of the primary emulsion $\phi_{o/o}$ in the final o/o/o emulsions is crucial for the structure and morphology of the resulted materials since double emulsions showed catastrophic phase inversion at higher $\phi_{o/o}$, between 0.4-0.6. Usually, double emulsions formed between these values exhibited unique porous structure when the middle oil phase was subsequently polymerized.

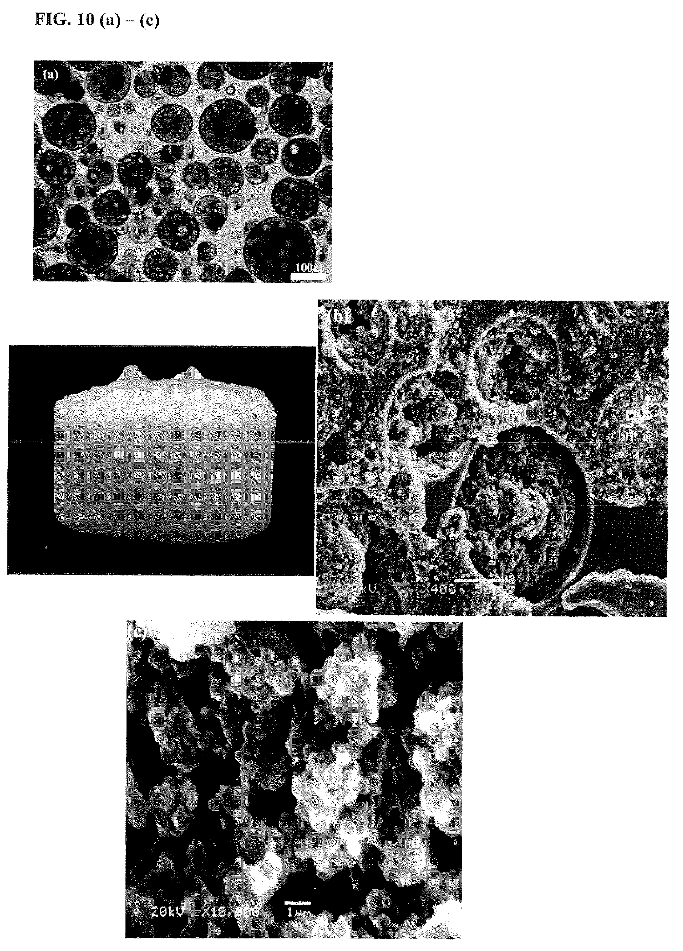

Pickering polyMIPDE prepared via polymerization of a styrene-in-glycerine-in-styrene (o/o/o) non-aqueous double emulsion, stabilized by 3 wt.% of 50% SiOH silica in the inter s/g interface and 2 wt.% of the same type of silica in the outer g/s interface $\phi_s = 0.2$, $\phi_{s/g} = 0.5$. For the double emulsions, 2 wt.% of AIBN (based on monomer mass) was added to both inner and outer monomer oil phases of the double o/o/o emulsions. The Pickering styrene-in-glycerine-in-styrene (s/g/s) double emulsion, interestingly, stabilized solely by one single type of silica nanoparticles, namely hydrophobic 50% SiOH silica. Stable s/g/s emulsion was obtained with glycerine globules sizes varying from 20-100 $\mu$m and internal styrene drops of the size range of 1-3 $\mu$m, estimated from optical microscopy (see Fig. 10 below). The volume fraction of styrene in the primary s/g emulsion was ($\phi_s$ = 0.2) and that of the primary emulsion in the outer styrene phase was ($\phi_{s/g}$ = 0.5). Either the inner or outer or both styrene phases can be polymerized according to the desired structure. When both, inner and outer, styrene phases were polymerized, a polymer monolith was formed with unique structure as shown in Fig. 10.

**Fig. 10** shows (a) optical micrograph for a styrene-in-glycerine-in-styrene (o/o/o) non-aqueous Pickering double emulsion stabilized by 3 wt.% of 50% SiOH silica in the inter s/g interface and 2 wt.% of the same type of silica in the outer g/s interface $\phi_s$ = 0.2, $\phi_{s/g}$ = 0.5, the digital image shows the polymer monolith formed. (b) SEM of Pickering polyMIPE formed after polymerization the (o/o/o) emulsion shown in (a). (c) Polystyrene polymer miniparticles formed inside the cells.

Large cells with average diameters of 100 $\mu$m can be clearly seen in Fig. 10b entrapping significant amount of polystyrene miniparticles in clusters. The formation of such a complex structure as polymerized Pickering miniemulsion in polymerized external oil phase can be described. The polystyrene miniparticles generated inside the large cells had an average diameter of 450 nm as estimated from SEM images. This structure can be used as microreactors or non-aqueous fine templates for synthesizing advanced materials by manipulating the parent o/o/o emulsion.

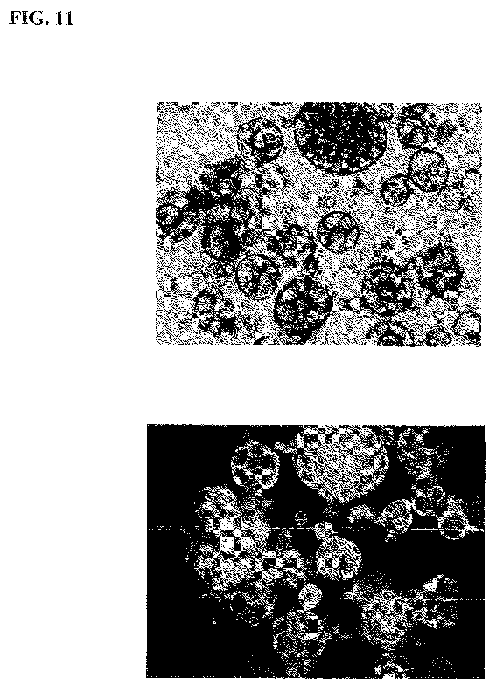

Also shown is another example of dual functions (magnetic and fluorescent) o/o/o emulsion of formamide-in-styrene-in-formamide fa/s/fa stabilized solely by single particle type (Fig. 11).

**Fig. 11** shows optical (left) and fluorescent (right) images for double o/o/o emulsion of a system of formamide-in-styrene-in-formamide fa/s/fa stabilized by 2 wt.% of 50% SiOH silica dispersed initially in styrene with $\phi_{fa}$ = 0.2. Inner formamide drops were loaded with 3 wt. % of unmodified water based magnetite nanoparticles and 0.2 wt.% Rhodamin b as a dye. Middle styrene phase contains 1 wt.% DVB and 2 wt.% AIBN. The $\phi_{fa/s}$ in the final double emulsion was 0.4. The outer formamide phase contains 2 wt.% of 50% SiOH silica nanoparticles.

The structure of the resulted double emulsions or the polymerized structures can be manipulated by changing the volume fraction of the primary o/o emulsion in the final double o/o/o emulsion. The emulsion can be polymerized to give rise of polymeric hollow microparticles, which replicate the same original structure of the parent emulsion before polymerization. It shall be noted that the second stage of producing this double emulsion involved hand shaking only. Other polymerized double emulsions that can be formulated in a similar way include for example: f/s/f, s/f/s, and triple f/s/f/s emulsions.

New o/o/o emulsions using (DCDMS) surface-modified hydrophobic silica nanoparticles for both the inner (o/o) emulsion and the outer oil interface were prepared. Different oils were used in the formulations with the inclusion of magnetite nanoparticles in the inner oil drops of one of these examples. The oils are clove oil, castor oil, glycerine, olive oil and silicon oil. This is to widen the applications of these new systems. Different oil soluble materials could be also included in the emulsion templates such as, drugs, solid materials, natural biopolymers, etc. All emulsions exhibited coalescence stability for more than 6 months.

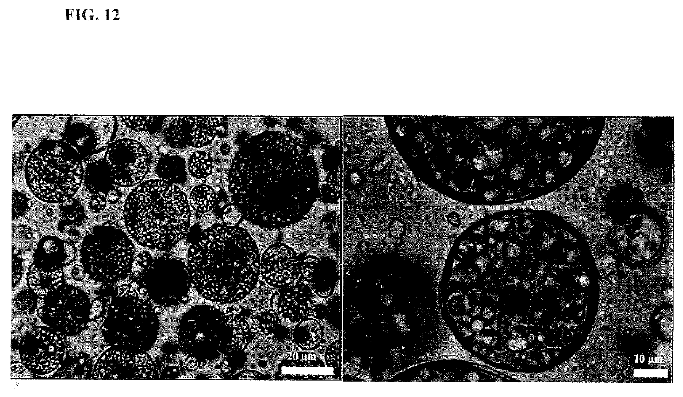

**Fig. 12** shows optical micrographs of clove-an-glycerine-in-clove (clo/g/clo) double emulsion at different magnifications 2 months from preparation. The emulsion was stabilized by 2 wt.% of 50% SiOH silica nanoparticles in glycerine ($\phi_c$ = 0.2) and 2 wt.% of same silica outer clove phase ($\phi_{clo/g}$ = 0.2). Notice the large number of inner clove drops entrapped inside large glycerine globules and the interface between them.

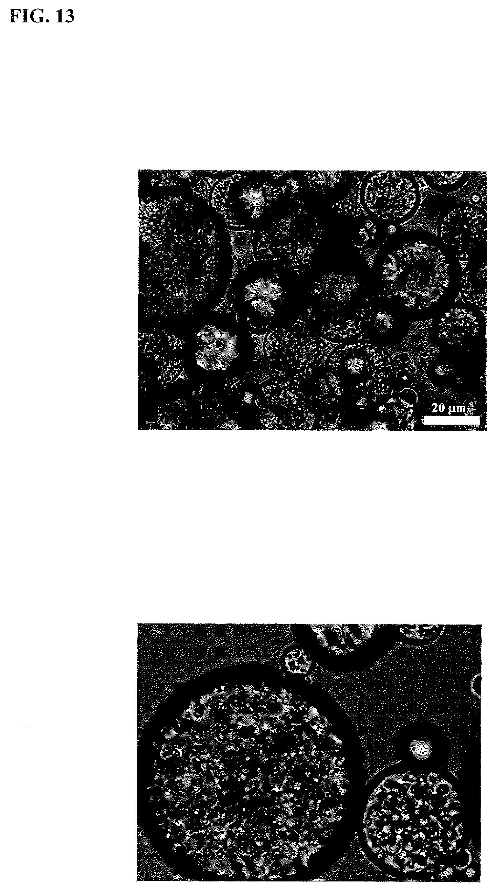

**Fig. 13** shows optical micrographs of glycerine-in-clove-in-glycerine (g/clo/g) double emulsion at different magnifications 2 months after preparation. The emulsion was stabilized by 2 wt.% of 50% SiOH silica nanoparticles in clove ($\phi_g$ = 0.2) and 2 wt.% of same silica in the outer glycerine phase ($\phi_{g/clo}$ = 0.2). Notice the large number of glycerine drops entrapped inside large clove globules and touching interface between them, indicative of excellent Pickering stabilization of the system.

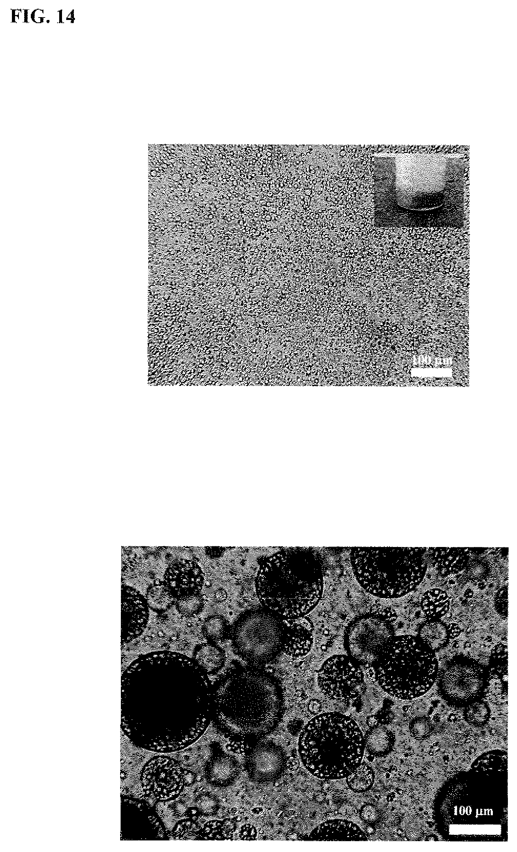

**Fig. 14** shows optical micrographs of magnetic simple clo/g (left) and double clo/g/clo emulsions (right) resulted from dispersions of 3 wt.% oleic acid-coated magnetite nanoparticles in clove oil and 2 wt.% of 50% SiOH silica in glycerine to make primary magnetic o/o emulsion which is then re-mixed with outer clove phase containing same type of silica as stabilizer.

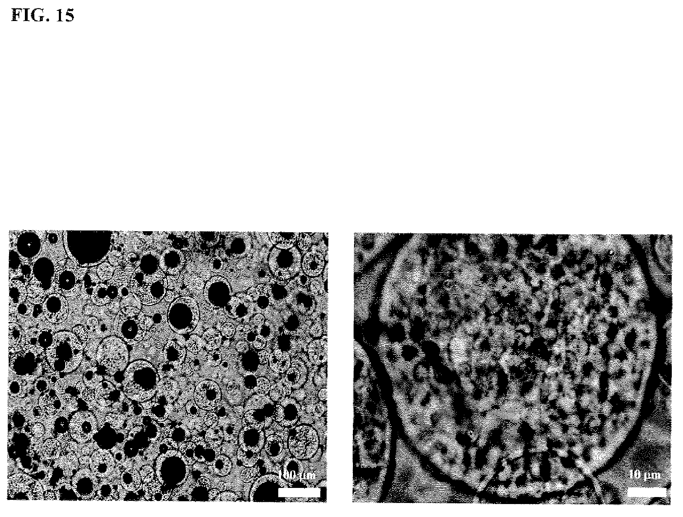

**Fig. 15** shows optical micrographs of glycerine-in-castor-in-glycerine (g/cast/g) double emulsion at different magnifications 2 months after preparation. The emulsion was stabilized by I wt.% of 50% SiOH silica nanoparticles in castor oil ($\phi_g$ = 0.2) and 1 wt.% of same silica in the outer glycerine phase ($\phi_{g/cast}$ = 0.2). Notice the large number of stable air bubbles which were found in the system.

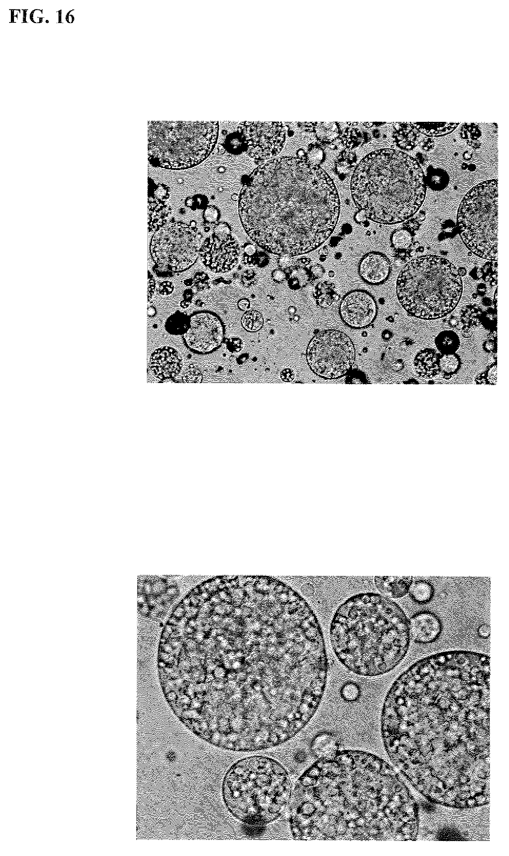

**Fig. 16** shows optical micrograph of glycerine-in-silicon oil-in-glycerine (g/so/g) double emulsion at different magnifications 2 months after preparation. The emulsion was stabilized by 1 wt.% of 50% SiOH silica nanoparticles in silicon oil ($\phi_{g/so}$ = 0.2) and 2 wt.% of same silica in the outer glycerine phase ($\phi_{g/so}$ = 0.25). Notice the number of stable air bubbles in the system.

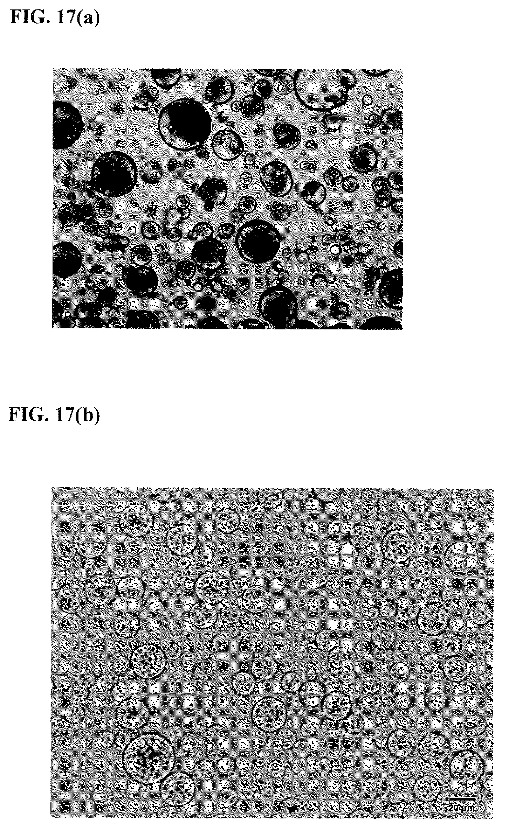

**Fig. 17(a)** shows optical micrograph of silicon oil-in-glycerine-in-glycerine-in- (so/g/so) double emulsion at different magnifications 2 months after preparation. The emulsion was stabilized by 1 wt.% of 50% SiOH silica nano-particles in silicon oil ($\phi_{so/g}$ = 0.2) and 2 wt.% of same silica in the outer silicon oil phase ($\phi_{so/g}$ = 0.25).

**Fig.17(b)** shows optical micrographs of olive oil-in-glycerine-in-olive oil (oliv/g/oliv) double emulsion 2 month after preparation. The emulsion was stabilised by 2 wt.% of 50% SiOH silica nanoparticles in glycerine ($\phi_{oliv}$ = 0.2) and 2 wt.% of same silica in the outer olive oil phase ($\phi_{oliv/g}$ = 0.2). The physical appearance this emulsion is transparent green colour emulsion with some air bubbles inside.

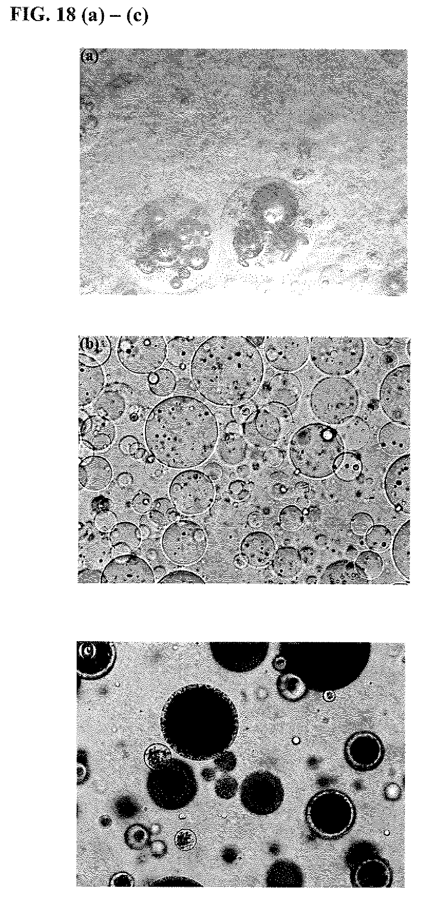

**Fig.18.** shows optical images for examples of particle-stabilized (air-in-liquid-in-liquid) multiple emulsions non-aqueous systems with volume fraction of foam around $\phi_{a/g}$ = 0.3. (a) Air-in-glycerine-in-castor (a/g/cast) multiple emulsion, the a/g foam stabilized by 1wt.% 50% SiOH silica particles (by hand shaking) and the outer castor oil phase contains 1 wt.% of the same silica particles, (b) Air-in-glycerine-in-castor emulsion same as in "a" but thea/g foam was homogenized before emulsification in the external castor oil phase. (c) Air-in-glycerine-in-silicon oil (a/g/so) multiple emulsion, the a/g foam stabilized by 3wt.% 23% SiOH silica particles (homogenized) and the outer silicon oil phase contains 1 wt.% of the same silica particles.

Preparation of materials from a/l/l emulsions

Also new type of particle stabilized multiple emulsions which we may denote it as (air-in-liquid-in-liquid) or (a/l/l/) multiple emulsion was prepared. In this novel type of multiple emulsions systems which basically contains air-in-liquid foam dispersed in another liquid material. In other words, when dispersing the obtained non-aqueous foams in a liquid that is immiscible with the oil phase used in the formulation of the foam. Therefore, air-in-glycerine or air-in-ethylene glycol foams can be re-homogenized in outer oil phase which can be selected as polymerizable or non-polymerizable oil phase.

Homogenizer or hand shaking methods were used to generate foams with either ethylene glycol or glycerol. The desired mass of silica particles was added to a known mass of the oil and the layer of silica powder usually formed on top of either liquid before mixing. The density of the foam were measured gravimetrically for selected samples by measure the mass and volume of part of the upper creamed foam layer and hence calculate the density. Volume fraction of the foam was measured by dividing the height in "cm" of the foam by the total height of the system (foam and separated clear liquid layer).

While the invention has been described with respect to the above specific embodiments, it should be recognized that various modifications and changes may be made to the invention by those skilled in the art which also fall within the scope of the invention as defined by the appended claims.

**Claims**

1. Method for preparing a micro-structured material, comprising:

   a) providing a stable particle-stabilized multiple emulsion comprising at least three phases; at least one of the phases, but not all of the phases, comprising monomer units; and
   b) polymerizing the monomer units in the intact stable particle-stabilized multiple emulsion,

   wherein the multiple emulsion is a w/o/w, o/w/o, w/o/w/o, o/w/o/w, o/o/o or a/l/l type emulsion.

2. Method according to claim 1, wherein the micro-structured material is a particulate material or a porous, monolithic material.

3. Method according to any of the preceding claims, wherein the particles used for stabilizing the particle-stabilized multiple emulsion are particles
   having a diameter from 1 - 100 nm, preferably 10 - 50 nm, most preferably 10 - 30 nm; and
   having hydrophilic groups located at the particle surface and/or hydrophobic groups located at the particle surface;
   wherein the particle-stabilized multiple emulsion comprises
   particles having surface hydroxyl group content from 23 to 50%; or
   two different sorts of particles differing in their ratio of hydrophilic groups to hydrophobic groups.

4. Method according to claim 3, wherein the particles are silicium dioxide particles and/or laponite particles.

5. Method according to claim 3 or 4, wherein the hydrophilic groups are hydroxyl groups.

6. Method according to any of claims 3 to 5, wherein the hydrophobic groups are alkyl silyl ether groups, preferably methyl silyl ether groups.

7. Method according to any of the preceding claims, wherein the monomer units are 1,6-hexanediol diacrylate, styrene, divinylbenzene or mixtures thereof.

8. Method according to any of the preceding claims, wherein at least one phase comprises a functional additive.

9. Method according to claim 8, wherein the functional additive is selected from metal particles, preferably zinc nano-particles, metal oxide particles, preferably iron oxide particles, a fluorescent material, preferably CdTe-quantum dots, a biological material, preferably sporopollenin, or dyes.

10. Micro-structured material obtainable by a method according to any of the preceding claims.

**Patentansprüche**

1. Verfahren zur Herstellung eines mikrostrukturierten Materials, umfassend:

   a) Bereitstellen einer stabilen Partikel-stabilisierten Mehrfachemulsion, die zumindest drei Phasen umfasst; wobei zumindest eine der Phasen, jedoch nicht alle der Phasen, Monomereinheiten umfasst; und
   b) Polymerisierten der Monomereinheiten in der intakten stabilen Partikel-stabilisierten Mehrfachemulsion,

   wobei die Mehrfachemulsion eine w/o/w-, o/w/o-, w/o/w/o-, o/w/o/w-, o/o/o- oder a/l/l-artige Emulsion ist.

2. Verfahren nach Anspruch 1, wobei das mikrostrukturierte Material ein partikuläres Material oder ein poröses, monolithisches Material ist.

3. Verfahren nach einem der vorangehenden Ansprüche, wobei die Partikel, die zur Stabilisierung der Partikel-stabilisierten Mehrfachemulsion verwendet werden, Partikel sind, die einen Durchmesser von 1 - 100 nm, vorzugsweise 10 - 50 nm, besonders bevorzugt 10 - 30 nm haben; und
   die Partikel hydrophile Gruppen haben, die an der Partikeloberfläche angeordnet sind, und/oder hydrophobe Gruppen haben, die an der Partikeloberfläche angeordnet sind;
   wobei die Partikel-stabilisierte Mehrfachemulsion Partikel umfasst, die einen Oberflächenhydroxylgruppengehalt von 23 bis 50% haben; oder
   zwei verschiedene Arten von Partikeln, die sich in dem Verhältnis von hydrophilen Gruppen zu hydrophoben Gruppen unterscheiden.

4. Verfahren nach Anspruch 3, wobei die Partikel Siliziumdioxidpartikel und/oder Laponitpartikel sind.

5. Verfahren nach Anspruch 3 oder 4, wobei die hydrophilen Gruppen Hydroxylgruppen sind.

6. Verfahren nach Anspruch 3 bis 5, wobei die hydrophoben Gruppen Alkylsilylethergruppen, vorzugsweise Methylsilylethergruppen, sind.

7. Verfahren nach einem der vorangehenden Ansprüche, wobei die Monomereinheiten 1,6-Hexandioldiacrylat, Styrol, Divinylbenzol oder Gemische derselben sind.

8. Verfahren nach einem der vorangehenden Ansprüche, wobei zumindest eine Phase ein funktionelles Additiv umfasst.

9. Verfahren nach Anspruch 8, wobei das funktionelle Additiv ausgewählt ist aus Metallpartikeln, vorzugsweise Zinknanopartikeln, Metalloxidpartikeln, vorzugsweise Eisenoxidpartikeln, einem fluoreszierenden Material, vorzugsweise CdTe-Quantenpunkten, einem biologischen Material, vorzugsweise Sporopollenin, oder Farbstoffen.

10. Mikrostrukturiertes Material erhältlich durch ein Verfahren nach einem der vorangehenden Ansprüche.

**Revendications**

1. Procédé de préparation d'un matériau microstucturé comprenant les étapes consistant à :

   a) créer une émulsion multiple stable, stabilisée par des particules, comprenant au moins trois phases ; au moins l'une des phases, mais pas toutes les phases, comportant des unités monomères ; et
   b) polymériser les unités monomères dans l'émulsion multiple stable, stabilisée par des particules,

   dans lequel l'émulsion multiple est une émulsion de type w/o/w, o/w/o, w/o/w/o, o/w/o/w, o/o/o ou a/l/l.

2. Procédé selon la revendication 1, dans lequel le matériau microstructuré est un matériau particulaire ou un matériau monolithique poreux.

3. Procédé selon l'une quelconque des revendications précédentes, dans lequel les particules utilisées pour stabiliser l'émulsion multiple stabilisée par des particules sont des particules
   ayant un diamètre allant de 1 à 100 nm, de préférence de 10 à 50 nm, et plus particulièrement de 10 à 30 nm ; et ayant des groupes hydrophiles situés au niveau de la surface des particules et/ou des groupes hydrophobes situés au niveau de la surface des particules ;
   dans lequel l'émulsion multiple, stabilisée par des particules, comprend des particules ayant une teneur en groupes hydroxyle de surface allant de 23 à 50 % ; ou
   deux différentes sortes de particules se distinguant dans leur rapport entre groupes hydrophiles et groupes hydrophobes.

4. Procédé selon la revendication 3, dans lequel les particules sont des particules de dioxyde de silicium et/ou des particules de laponite.

5. Procédé selon la revendication 3 ou 4, dans lequel les groupes hydrophiles sont des groupes hydroxyle.

6. Procédé selon l'une quelconque des revendications 3 ou 5, dans lequel les groupes hydrophobes sont des groupes alkyl-silyl-éther, de préférence des groupes méthyl-silyl-éther.

7. Procédé selon l'une quelconque des revendications précédentes, dans lequel les unités monomères sont du diacrylate de 1,6-hexanediol, du styrène, du divinylbenzène ou des mélanges de ceux-ci.

8. Procédé selon l'une quelconque des revendications précédentes, dans lequel au moins une phase comprend un additif fonctionnel.

9. Procédé selon la revendication 8, dans lequel l'additif fonctionnel est sélectionné parmi des particules de métal, de préférence des nano-particules de zinc, des particules d'oxyde de métal, de préférence des particules d'oxyde de fer, un matériau fluorescent, de préférence des points quantiques de CdTe, un matériau biologique, de préférence de la sporopollénine ou des colorants.

10. Matériau microstructuré pouvant être obtenu par un procédé selon l'une quelconque des revendications précédentes.

FIG. 1(a)

Fig. 1(b)

FIG. 2 (a)

FIG. 2 (b)

**FIG. 2 (c)**

**FIG. 2 (d)**

FIG. 2 (e)

FIG. 2 (f)

FIG. 3 (a)

FIG. 3 (b)

FIG. 3 (c) and (d)

FIG. 3 (e) and (f)

FIG. 4 (a) - (g)

FIG. 5 (a) – (d)

FIG. 6 (a) and (b)

FIG. 7 (a) – (f)

**FIG. 8 (a) – (d)**

**FIG. 9**
**TGA analysis of polyMIPDE-3 and polyHIPE-4 under nitrogen atmosphere**

FIG. 10 (a) – (c)

FIG. 11

FIG. 12

**FIG. 13**

EP 2 769 995 B1

**FIG. 14**

32

FIG. 15

FIG. 16

**FIG. 17(a)**

**FIG. 17(b)**

FIG. 18 (a) – (c)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0060138 B1
- US 20030175317 A1
- GB 2400609 A

**Non-patent literature cited in the description**

- **KRALCHEVSKY et al.** *Langmuir,* 2005, vol. 21, 50
- **COLVER et al.** *Chem. Mater.,* 2007, vol. 19, 1537
- **ZHANG et al.** *Chem. Mater.,* 2002, vol. 14, 4017
- **A. IMHOF et al.** *J. Colloid. Interface Sci.,* 1997, vol. 192, 368
- **S. LEVINE et al.** *Colloids Surf. A,* 1989, vol. 38, 325
- **PAUNOV et al.** *J. Mater Chem.,* 2011, vol. 21, 18018
- **B.P. BINKS et al.** *Phys. Chem. Chem. Phys.,* 2002, vol. 4, 3727
- **B.P. BINKS et al.** *Langmuir,* 2003, vol. 19, 8888